# EUROPÄISCHE PATENTANMELDUNG

(11) **EP 3 208 546 A1**
(43) Veröffentlichungstag der Anmeldung: **23.08.2017**
(21) Anmeldenummer: 17150952.4
(22) Anmeldetag: 11.01.2017
(51) Int. Cl.: F24C 15/20, F16B 5/06, F16B 21/09

(54) **BEFESTIGUNGSVORRICHTUNG ZUM BEFESTIGEN EINES BEDIENTEILS FÜR EIN HAUSHALTGERÄT, GEHÄUSETEIL FÜR EIN HAUSHALTGERÄT UND HAUSHALTGERÄT**

(30) Priorität: 16.02.2016 DE 102016102674
(71) Anmelder: Miele & Cie. KG, 33332 Gütersloh (DE)
(72) Erfinder: Baehr, Thomas, 59846 Sundern (DE); Fenne, Michael, 59846 Sundern (DE); Ricke, Michael, 59757 Arnsberg (DE)

(57) **Zusammenfassung**

Die Erfindung betrifft eine Befestigungsvorrichtung (400) zum Befestigen eines Bedienteils für ein Haushaltgerät. Das Haushaltgerät weist ein Gehäuseteil (110) mit einem Bedienteilausschnitt (550) zur Aufnahme des Bedienteils auf. Die Befestigungsvorrichtung (400) weist zumindest ein Klemmprofilelement (230) auf, das ausgeformt ist, um formschlüssig mit dem Bedienteilausschnitt (550) koppelbar zu sein und das Bedienteil bezüglich einer Bewegung in einer Erstreckungsebene des Bedienteilausschnitts (550) zu fixieren. Die Befestigungsvorrichtung (400) weist ferner zumindest einen Klemmbügel (440) auf, der ausgeformt ist, um formschlüssig mit dem zumindest einen Klemmprofilelement (230) koppelbar zu sein und das Bedienteil bezüglich einer Bewegung quer zu der Erstreckungsebene des Bedienteilausschnitts (550) zu fixieren.

## Beschreibung

Die Erfindung betrifft eine Befestigungsvorrichtung zum Befestigen eines Bedienteils für ein Haushaltgerät, ein Gehäuseteil für ein Haushaltgerät und ein Haushaltgerät.

Zur Befestigung bzw. Positionierung von Bedienteilen an Haushaltgeräten, wie beispielsweise Dunstabzugshauben, können für gewöhnlich zum Beispiel Schrauben, Muttern und dergleichen eingesetzt werden.

Der Erfindung stellt sich die Aufgabe, eine verbesserte Befestigungsvorrichtung zum Befestigen eines Bedienteils für ein Haushaltgerät, ein verbessertes Gehäuseteil für ein Haushaltgerät und ein verbessertes Haushaltgerät bereitzustellen.

Erfindungsgemäß wird diese Aufgabe durch eine Befestigungsvorrichtung zum Befestigen eines Bedienteils für ein Haushaltgerät, durch ein Gehäuseteil für ein Haushaltgerät und durch ein Haushaltgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer Realisierung einer werkzeuglosen und Montage und Demontage von Bedienteilen an Haushaltgeräten auch in einer Ermöglichung einer Schnellmontage von Bedienteilen für Haushaltgeräte. Anders als bei einer Befestigung durch Schrauben, Muttern oder dergleichen ist insbesondere kein Werkzeug für die Montage und Demontage erforderlich. Zusätzlich wird eine sichere Befestigung beispielsweise unabhängig von einem anwenderabhängigen Drehmoment oder dergleichen ermöglicht. Somit kann insbesondere eine Platzierung und Befestigung von Bedienteilen sowohl in der Montage als auch im Kundendienstfall vereinfacht werden. Eine stabile und zuverlässige Montage und Demontage kann somit ohne Werkzeug erfolgen. Die Montage kann unabhängig von Drehmomenten, Blechdicken oder anderen anwendungsabhängigen bzw. nutzerabhängigen Einflüssen einfach und schnell ermöglicht werden.

Es wird eine Befestigungsvorrichtung zum Befestigen eines Bedienteils für ein Haushaltgerät vorgestellt, wobei das Haushaltgerät ein Gehäuseteil mit einem Bedienteilausschnitt zur Aufnahme des Bedienteils aufweist, wobei die Befestigungsvorrichtung folgende Merkmale aufweist:
zumindest ein Klemmprofilelement, das ausgeformt ist, um formschlüssig mit dem Bedienteilausschnitt koppelbar zu sein und das Bedienteil bezüglich einer Bewegung in einer Erstreckungsebene des Bedienteilausschnitts zu fixieren; und
zumindest einen Klemmbügel, der ausgeformt ist, um formschlüssig mit dem zumindest einen Klemmprofilelement koppelbar zu sein und das Bedienteil bezüglich einer Bewegung quer zu der Erstreckungsebene des Bedienteilausschnitts zu fixieren.

Bei dem Haushaltgerät kann es sich um eine Dunstabzugshaube oder ein anderes Haushaltgerät handeln. Das Bedienteil kann in einem an dem Gehäuseteil befestigten Zustand des Bedienteils zumindest partiell in dem Bedienteilausschnitt aufgenommen sein.

Gemäß einer Ausführungsform können der zumindest eine Klemmbügel und das zumindest eine Klemmprofilelement ausgeformt sein, um durch eine Translation relativ zueinander entlang der Erstreckungsebene miteinander koppelbar und voneinander lösbar zu sein. Eine solche Ausführungsform bietet den Vorteil, dass eine sichere und schnelle Montage und Demontage des Bedienteils durch einen einfachen Bewegungsablauf beim Entkoppeln des zumindest einen Klemmbügels und des zumindest einen Klemmprofilelements ermöglicht wird.

Auch kann das zumindest eine Klemmprofilelement ausgeformt sein, um durch eine Translation entlang der Erstreckungsebene mit dem Bedienteilausschnitt koppelbar und von dem Bedienteilausschnitt lösbar zu sein. Eine solche Ausführungsform bietet den Vorteil, dass die mechanische Kopplung zwischen der Befestigungsvorrichtung und dem Gehäuseteil einfach und zuverlässig erfolgen kann. So brauchen auch auf Seiten des Gehäuseteils keine speziellen Anpassungen vorgenommen werden.

Ferner können das zumindest eine Klemmprofilelement und der zumindest eine Klemmbügel ausgeformt sein, um ineinander einzurasten. Eine solche Ausführungsform bietet den Vorteil, dass eine Stabilität der mechanischen Kopplung zwischen dem zumindest einen Klemmprofilelement und dem zumindest einen Klemmbügel erhöht werden kann.

Zudem kann oder können das zumindest eine Klemmprofilelement und zusätzlich oder alternativ der zumindest eine Klemmbügel zumindest in einem Teilabschnitt hinterschnitten ausgeformt sein. Hierbei kann oder können das zumindest ein Klemmprofilelement und zusätzlich oder alternativ der zumindest eine Klemmbügel zumindest einen Teilabschnitt aufweisen, in dem eine Hinterschneidung ausgeformt ist. Insbesondere kann oder können das zumindest ein Klemmprofilelement und zusätzlich oder alternativ der zumindest eine Klemmbügel in dem zumindest einen Teilabschnitt einen Kragen, eine Schiene oder dergleichen aufweisen. Eine solche Ausführungsform bietet den Vorteil, dass eine Montage und Demontage des Bedienteils bzw. der Befestigungsvorrichtung vereinfacht werden können.

Auch kann der zumindest eine Klemmbügel ausgeformt sein, um das Bedienteil zumindest partiell zu umgreifen. Hierbei kann der zumindest eine Klemmbügel ein U-förmiges Schnittprofil aufweisen. Eine solche Ausführungsform bietet den Vorteil, dass eine sichere und robuste Fixierung des Bedienteils ermöglicht wird.

Gemäß einer Ausführungsform kann die Befestigungsvorrichtung zwei Klemmprofilelemente und zwei Klemmbügel aufweisen. Dabei kann ein erster Klemmbügel einem ersten Klemmprofilelement zugeordnet sein. Auch kann ein zweiter Klemmbügel einem zweiten Klemmprofilelement zugeordnet sein. Eine solche Ausführungsform bietet den Vorteil, dass eine Stabilität und Zuverlässigkeit einer Befestigung des Bedienteils weiter erhöht werden können.

Es wird auch ein Gehäuseteil für ein Haushaltgerät vorgestellt, wobei das Gehäuseteil folgendes Merkmal aufweist:
einen Bedienteilausschnitt zur Aufnahme eines Bedienteils für das Haushaltgerät, wobei der Bedienteilausschnitt länglich ausgeformt ist, wobei der Bedienteilausschnitt in an seine Enden angrenzenden Endabschnitten eine erste Breite aufweist und in einem Mittelabschnitt zwischen den Endabschnitten eine zweite Breite aufweist, die größer als die erste Breite ist.

In Verbindung mit dem Gehäuseteil mit dem Bedienteilausschnitt kann eine Ausführungsform der vorstehend genannten Befestigungsvorrichtung vorteilhaft verwendet oder eingesetzt werden, um ein Bedienteil an dem Gehäuseteil zu befestigen. Der Bedienteilausschnitt kann als ein Langloch, ein länglicher Schlitz oder dergleichen ausgeformt sein.

Gemäß einer Ausführungsform kann der Bedienteilausschnitt stufenförmige Übergangsabschnitte zwischen den Endabschnitten und dem Mittelabschnitt aufweisen. In einem stufenförmigen Übergangsabschnitt kann jede Langseite des Bedienteilausschnitts beispielsweise zwei Knickstellen oder abgerundete Knickstellen aufweisen, wobei jeder Knick einen rechten Winkel oder stumpfen Winkel aufweist. Eine solche Ausführungsform bietet den Vorteil, dass ein sicherer und stabiler Halt für die Befestigungsvorrichtung bereitgestellt werden kann.

Es wird ferner ein Haushaltgerät vorgestellt, das folgende Merkmale aufweist:
eine Ausführungsform der vorstehend genannten Befestigungsvorrichtung;
eine Ausführungsform des vorstehend genannten Gehäuseteils; und
ein Bedienteil, wobei das Bedienteil mittels der Befestigungsvorrichtung in einem Bereich des Bedienteilausschnitts an dem Gehäuseteil befestigbar oder befestigt ist.

Somit können in Verbindung mit dem Haushaltgerät eine Ausführungsform der vorstehend genannten Befestigungsvorrichtung und eine Ausführungsform des vorstehend genannten Gehäuseteils vorteilhaft verwendet oder eingesetzt werden, um das Bedienteil an dem Gehäuseteil zu befestigen.

Ein Ausführungsbeispiel der Erfindung ist in den Zeichnungen rein schematisch dargestellt und wird nachfolgend näher beschrieben. Es zeigt
- Figur 1: ein Haushaltgerät gemäß einem Ausführungsbeispiel der Erfindung;
- Figur 2: ein Gehäuseteil gemäß einem Ausführungsbeispiel der Erfindung mit einem befestigten Bedienteil für ein Haushaltgerät;
- Figur 3: das Bedienteil aus Figur 1 bzw. Figur 2;
- Figur 4: ein Gehäuseteil gemäß einem Ausführungsbeispiel der Erfindung mit einem befestigten Bedienteil für ein Haushaltgerät;
- Figur 5: einen Bedienteilausschnitt in einem Gehäuseteil gemäß einem Ausführungsbeispiel der Erfindung;
- Figur 6: eine Befestigungsvorrichtung gemäß einem Ausführungsbeispiel der Erfindung in einem teilweise gekoppelten Zustand in einem Bedienteilausschnitt eines Gehäuseteils;
- Figur 7: die Befestigungsvorrichtung aus Figur 6 in einem gekoppelten Zustand;
- Figur 8: eine Befestigungsvorrichtung gemäß einem Ausführungsbeispiel der Erfindung und ein an einem Gehäuseteil befestigtes Bedienteil; und
- Figur 9: die Befestigungsvorrichtung aus Figur 8 und das an dem Gehäuseteil befestigte Bedienteil.

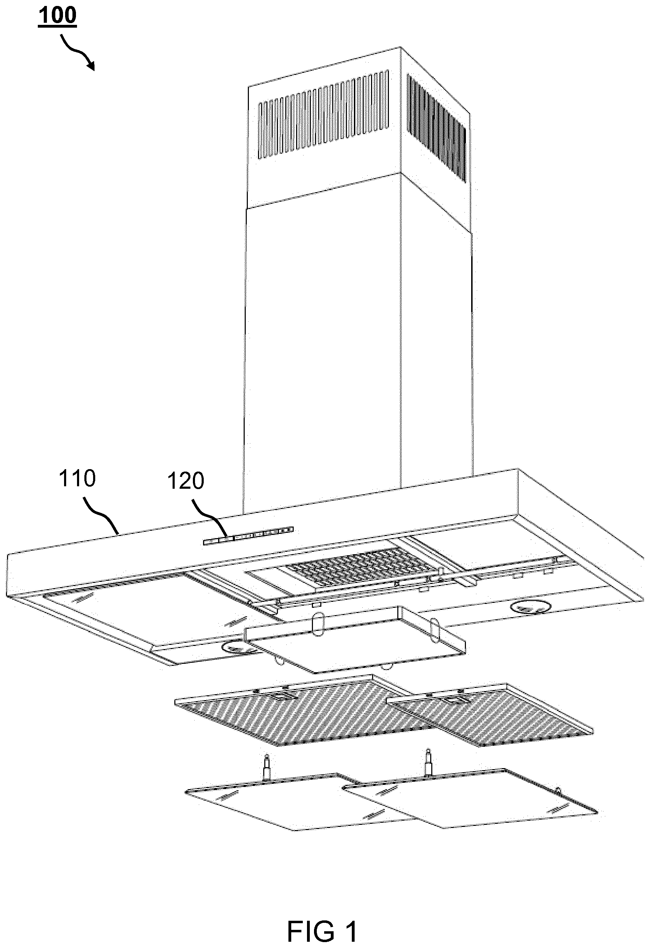

Figur 1 zeigt ein Haushaltgerät 100 gemäß einem Ausführungsbeispiel der Erfindung, beispielsweise in einer perspektivischen Teilexplosionsdarstellung. Bei dem Haushaltgerät 100 handelt es sich hierbei lediglich beispielhaft um eine Dunstabzugshaube. Hierbei sind Filter und Filterabdeckungen des Haushaltgeräts 100 getrennt von einem Korpus des Haushaltgeräts 100 dargestellt.

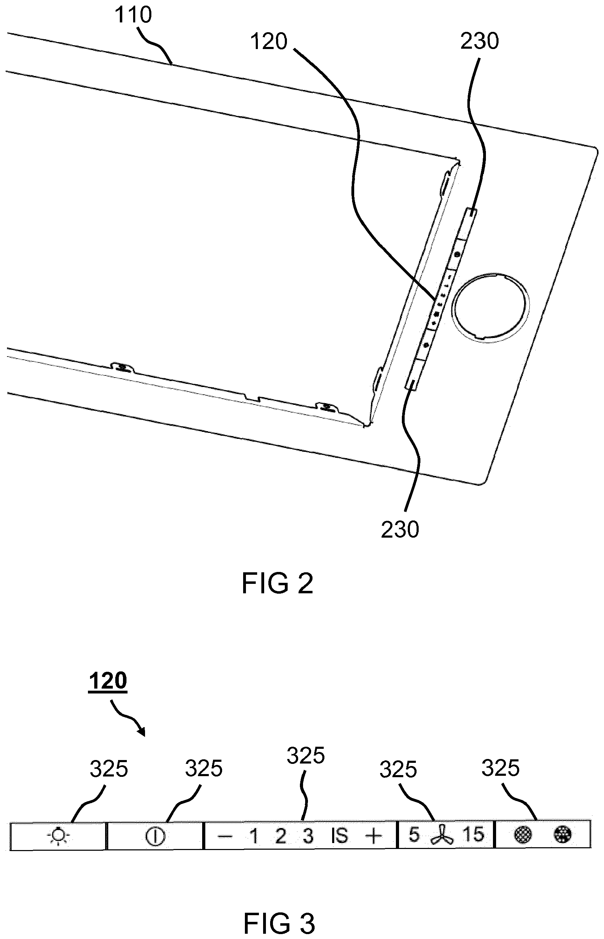

Das Haushaltgerät 100 weist ein Gehäuseteil 110 auf. Ferner weist das Haushaltgerät 100 ein Bedienteil 120 auf. Das Bedienteil 120 ist mittels einer Befestigungsvorrichtung in einem Bereich eines Bedienteilausschnitts des Gehäuseteils befestigt. Das Gehäuseteil 110, der Bedienteilausschnitt, Bedienteil 120 und die Befestigungsvorrichtung werden nachfolgend unter Bezugnahme auf die Figuren 2 bis 9 noch detaillierter erläutert.

Figur 2 zeigt ein Gehäuseteil 110 gemäß einem Ausführungsbeispiel der Erfindung mit einem befestigten Bedienteil 120 für ein Haushaltgerät. Bei dem Gehäuseteil 110 handelt es sich um das Gehäuseteil aus Figur 1 oder ein ähnliches Gehäuseteil. Bei dem Bedienteil 120 handelt es sich um das Bedienteil aus Figur 1 oder ein ähnliches Bedienteil. Dabei zeigt Figur 2 das Gehäuseteil 110 und das Bedienteil 120 von einer Vorderseite.

Das Bedienteil 120 ist mittels einer Befestigungsvorrichtung an dem Gehäuseteil 110 befestigt. Das Gehäuseteil 110 ist ausgebildet, um eine Befestigung des Bedienteils 120 an dem Gehäuseteil 110 zu ermöglichen. Dazu weist das Gehäuseteil 110 einen Bedienteilausschnitt auf, der in Figur 2 nicht explizit gezeigt ist. Das Bedienteil 120 ist im Bereich des Bedienteilausschnitts an dem Gehäuseteil 110 befestigt.

Von der Befestigungsvorrichtung sind in Figur 2 darstellungsbedingt lediglich Teilabschnitte von beispielhaft zwei Klemmprofilelementen 230 gezeigt. Das Bedienteil 120 ist zwischen den Klemmprofilelementen 230 in dem Bedienteilausschnitt des Gehäuseteils 110 angeordnet.

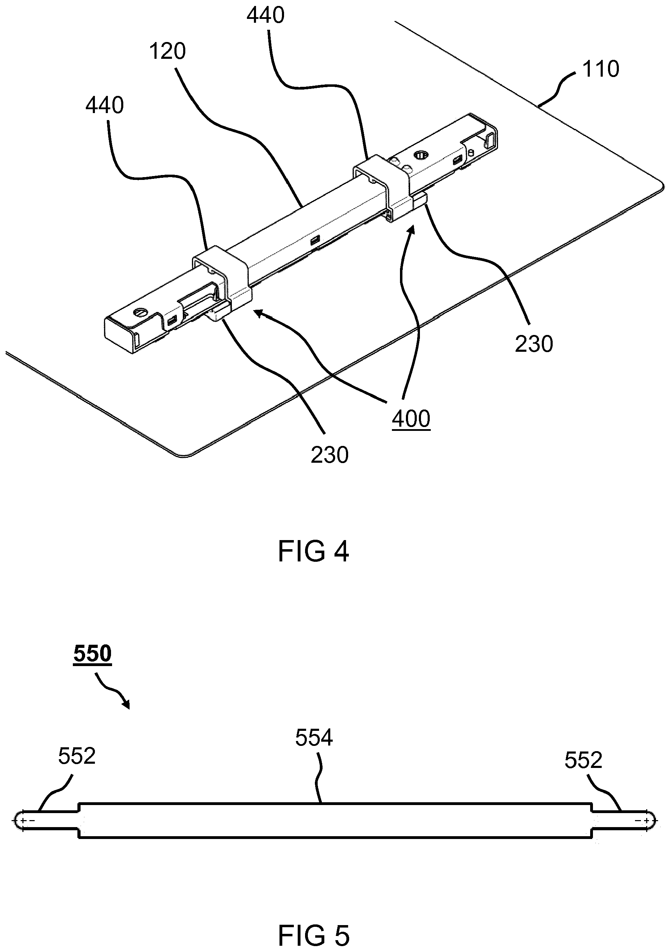

Figur 3 zeigt das Bedienteil 120 aus Figur 1 bzw. Figur 2. Bei dem Bedienteil 120 kann es sich alternativ auch um ein ähnliches Bedienteil 120 handeln. Das Bedienteil 120 weist eine Mehrzahl von Tasten 325 auf. Gemäß dem hier gezeigten Beispiel weist das Bedienteil 120 lediglich beispielhaft fünf Tasten 325 auf. Es ist auch möglich, dass lateral links und rechts neben den Tasten 325 Zierleisten vorgesehen sind, deren Erscheinung ähnlich oder identisch mit den Tasten 325 ist. Vorzugsweise dienen die hier nicht gezeigten Zierleisten der Abdeckung der in Figur 5 dargestellten Endabschnitte 552 des Bedienteilausschnittes 550.

Figur 4 zeigt ein Gehäuseteil 110 gemäß einem Ausführungsbeispiel der Erfindung mit einem befestigten Bedienteil 120 für ein Haushaltgerät. Bei dem Gehäuseteil 110 handelt es sich um das Gehäuseteil aus Figur 1 bzw. Figur 2 oder ein ähnliches Gehäuseteil. Bei dem Bedienteil 120 handelt es sich um das Bedienteil aus Figur 1 bzw. Figur 2 oder ein ähnliches Bedienteil. Insbesondere zeigt Figur 4 das Gehäuseteil 110 und das Bedienteil 120 aus Figur 2 von einer Rückseite.

Hierbei zeigt Figur 4 ferner die Befestigungsvorrichtung 400, mittels derer das Bedienteil 120 an dem Gehäuseteil 110 befestigt ist. Die Befestigungsvorrichtung 400 ist ausgebildet, um das Bedienteil 120 an dem Gehäuseteil 110 zu befestigen. Gemäß dem in Figur 4 dargestellten Ausführungsbeispiel der Erfindung weist die Befestigungsvorrichtung 400 zwei Klemmprofilelemente 230 und zwei Klemmbügel 440 auf.

Die Klemmprofilelemente 230 sind mit dem Gehäuseteil 110 gekoppelt. Jeweils ein Klemmbügel 440 ist mit jeweils einem Klemmprofilelement 230 gekoppelt. Anders ausgedrückt ist ein erster Klemmbügel 440 einem ersten Klemmprofilelement 230 zugeordnet und ist ein zweiter Klemmbügel 440 einem zweiten Klemmprofilelement 230 zugeordnet. Dabei ist jeder Klemmbügel 440 ausgeformt, um das Bedienteil 120 zumindest partiell bzw. zumindest in einem Teilabschnitt zu umgreifen.

Figur 5 zeigt einen Bedienteilausschnitt 550 in einem Gehäuseteil gemäß einem Ausführungsbeispiel der Erfindung. Der Bedienteilausschnitt 550 ist hierbei in dem Gehäuseteil aus Figur 1, Figur 2 bzw. Figur 4 ausgeformt. Das Gehäuseteil ist beispielsweise ein Blech, wobei der Bedienteilausschnitt 550 einen Blechausschnitt repräsentiert. Der Bedienteilausschnitt 550 ist ausgebildet bzw. ausgeformt, um zumindest einen Teilabschnitt des Bedienteils einer der Figuren 1 bis 4 oder eines ähnlichen Bedienteils aufzunehmen. Eine Erstreckungsebene des Bedienteilausschnitts 550 entspricht beispielhaft einer Zeichnungsebene von Figur 5.

Gemäß dem in Figur 5 dargestellten Ausführungsbeispiel der Erfindung ist der Bedienteilausschnitt 550 länglich ausgeformt. Der Bedienteilausschnitt 550 weist Endabschnitte 552, die an die beiden Enden des Bedienteilausschnitts 550 angrenzen, und einen Mittelabschnitt 554 zwischen den Endabschnitten 552 auf. Dabei weist der Bedienteilausschnitt 550 in den Endabschnitten 552 eine erste Breite auf und weist in dem Mittelabschnitt 554 eine zweite Breite auf, die größer als die erste Breite ist. Ferner weist der Bedienteilausschnitt 550 hierbei stufenförmige Übergangsabschnitte zwischen den Endabschnitten 552 und dem Mittelabschnitt 554 auf.

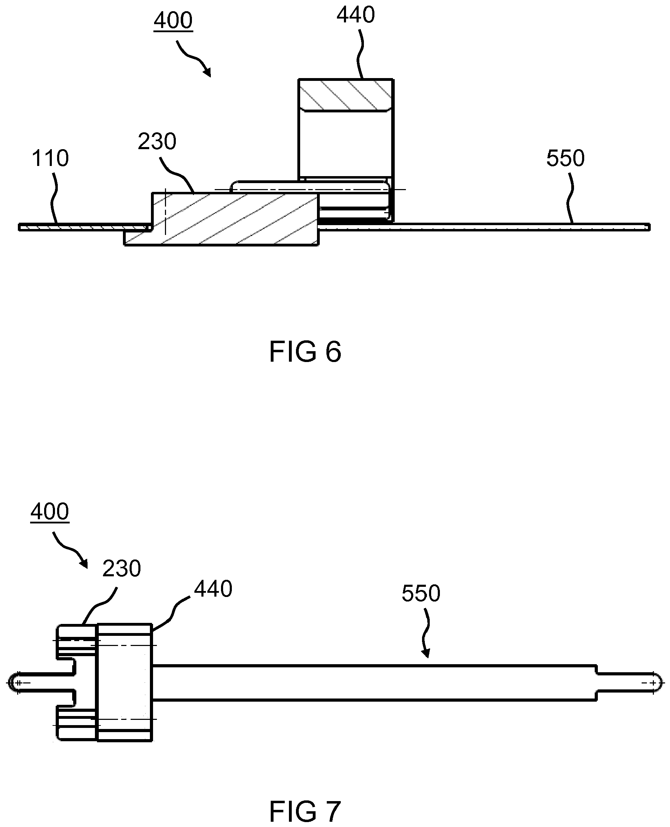

Figur 6 zeigt eine Befestigungsvorrichtung 400 gemäß einem Ausführungsbeispiel der Erfindung in einem teilweise gekoppelten Zustand in einem Bedienteilausschnitt 550 eines Gehäuseteils 110. Bei der Befestigungsvorrichtung 400 handelt es sich um die Befestigungsvorrichtung aus Figur 4 oder eine ähnliche Befestigungsvorrichtung. Das Gehäuseteil 110 und der Bedienteilausschnitt 550 entsprechen dem Gehäuseteil und dem Bedienteilausschnitt aus den Figuren 1 bis 5 oder ähnlichen. Die Befestigungsvorrichtung 400 ist in Figur 6 in einer Schnittdarstellung entlang einer Längsachse des Bedienteilausschnitts 550 dargestellt.

Hierbei sind in der Darstellung in Figur 6 von der Befestigungsvorrichtung 400 lediglich beispielhaft ein Klemmprofilelement 230 und ein Klemmbügel 440 gezeigt. Das Klemmprofilelement 230 ist ausgeformt, um formschlüssig mit dem Bedienteilausschnitt 550 koppelbar zu sein. Ferner ist das Klemmprofilelement 230 ausgeformt, um das Bedienteil bezüglich einer Bewegung in einer Erstreckungsebene des Bedienteilausschnitts 550 zu fixieren. Der Klemmbügel 440 ist ausgeformt, um formschlüssig mit dem Klemmprofilelement 230 koppelbar zu sein. Auch ist der Klemmbügel 440 ausgeformt, um das Bedienteil bezüglich einer Bewegung quer zu der Erstreckungsebene des Bedienteilausschnitts 550 zu fixieren. Das Klemmprofilelement 230 ist in der Darstellung von Figur 6 mit dem Gehäuseteil 110 bzw. dem Bedienteilausschnitt 550 gekoppelt, wobei das Klemmprofilelement 230 und der Klemmbügel 440 teilweise miteinander gekoppelt sind.

Anders ausgedrückt ist das Klemmprofilelement 230 durch einen Formschluss mit dem Gehäuseteil 110 bzw. Blech in dem Bedienteilausschnitt 550 gehalten. Eine weitere Fixierung des Klemmprofilelements 230 ergibt sich bei in den Bedienteilausschnitt 550 eingesetztem Bedienteil. Der Klemmbügel 440 ist gemäß dem hier dargestellten Ausführungsbeispiel der Erfindung durch eine Hinterschneidung bzw. einen Hinterschnitt mit dem Klemmprofilelement 230 und zusätzlich oder alternativ bzw. optional durch eine Verrastung mit dem Klemmprofilelement 230 gehalten. Anders ausgedrückt ist oder sind das Klemmprofilelement 230 und/oder der Klemmbügel 440 zumindest in einem Teilabschnitt hinterschnitten ausgeformt. Gemäß einem Ausführungsbeispiel sind das Klemmprofilelement 230 und der Klemmbügel 440 ausgeformt, um ineinander einzurasten. Der Klemmbügel 440 ist ausgebildet, um das Bedienteil gegen das Gehäuseteil 110 in den Bedienteilausschnitt 550 zu drücken.

Das Klemmprofilelement 230 ist ausgeformt, um durch eine Translation entlang der Erstreckungsebene des Bedienteilausschnitts 550 mit dem Bedienteilausschnitt 550 koppelbar und von dem Bedienteilausschnitt 550 lösbar zu sein. Der Klemmbügel 440 und das Klemmprofilelement 230 sind ausgeformt, um durch eine Translation relativ zueinander entlang der Erstreckungsebene des Bedienteilausschnitts 550 miteinander koppelbar und voneinander lösbar zu sein.

Eine Bewegung des Klemmprofilelements 230 ist durch das Gehäuseteil 110 bzw. den Bedienteilausschnitt 550 in Richtungen quer zu der Erstreckungsebene sowie in der Erstreckungsebene bis auf eine Demontagerichtung zur Entkopplung des Klemmprofilelements 230 gesperrt. Eine Bewegung des Klemmprofilelements 230 in die Demontagerichtung ist durch das Bedienteil in einem befestigten Zustand gesperrt. Ferner ist eine Bewegung des Klemmbügels 440 in alle Richtungen und um alle Achsen bis auf die Demontagerichtung durch das Klemmprofilelement 230 gesperrt. Eine Bewegung des Klemmbügels 440 in die Demontagerichtung ist beispielsweise durch die Verrastung bzw. Rastung gesperrt.

Figur 7 zeigt die Befestigungsvorrichtung 400 aus Figur 6 in einem gekoppelten Zustand. Hierbei sind die Befestigungsvorrichtung für 100 und der Bedienteilausschnitt 550 in einer Draufsicht dargestellt. Das Klemmprofilelement 230 und der Klemmbügel 440 sind in Figur 7 vollständig miteinander gekoppelt. In Figur 7 ist auch erkennbar, dass das Klemmprofilelement 230 und somit auch der Klemmbügel 440 im Bereich eines Endabschnitts des Bedienteilausschnitts 550 angeordnet sind.

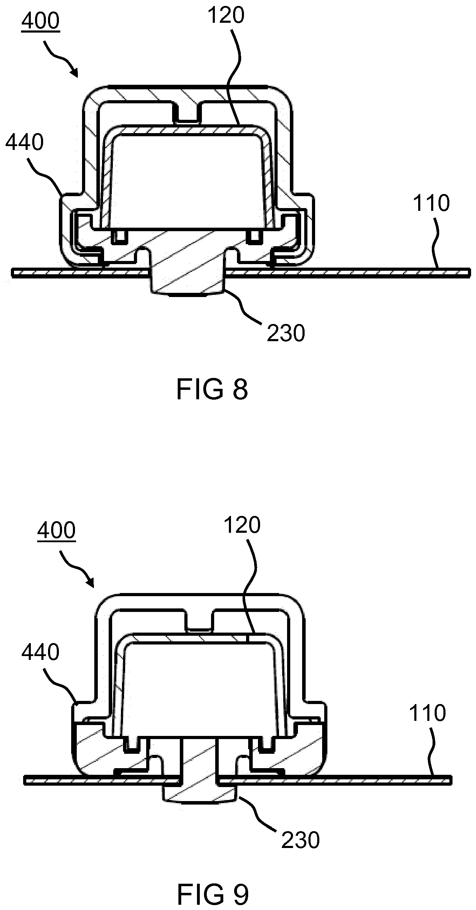

Figur 8 zeigt eine Befestigungsvorrichtung 400 gemäß einem Ausführungsbeispiel der Erfindung und ein an einem Gehäuseteil 110 befestigtes Bedienteil 120. Bei der Befestigungsvorrichtung 400 handelt es sich um die Befestigungsvorrichtung aus Figur 4, Figur 6 bzw. Figur 7 oder eine ähnliche Befestigungsvorrichtung. Das Gehäuseteil 110 und das Bedienteil 120 entsprechen dem Gehäuseteil und dem Bedienteil aus den Figuren 1 bis 7 oder ähnlichen. Die Befestigungsvorrichtung 400 ist in Figur 8 in einer Schnittdarstellung quer zu einer Längsachse bzw. entlang einer Querachse des Bedienteilausschnitts dargestellt.

Das Bedienteil 120 ist mittels der Befestigungseinrichtung 400 an dem Gehäuseteil 110 befestigt. Dabei ist das Bedienteil 120 zwischen dem Klemmprofilelement 230 und dem Klemmbügel 440 festgeklemmt angeordnet. Dabei ist der Klemmbügel 440 ausgeformt, um das Bedienteil 120 zumindest partiell zu umgreifen. Der Klemmbügel 440 ist gemäß dem in Figur 8 dargestellten Ausführungsbeispiel der Erfindung ferner ausgeformt, um zumindest einen Teilabschnitt des Klemmprofilelements 230 zu umgreifen.

Figur 9 zeigt die Befestigungsvorrichtung 400 aus Figur 8 und das an dem Gehäuseteil 110 befestigte Bedienteil 120. Hierbei ist die Befestigungsvorrichtung 400 in einer Schnittdarstellung quer zu einer Längsachse bzw. entlang einer Querachse des Bedienteilausschnitts dargestellt, wobei verglichen mit einer Schnittebene aus Figur 8 eine Schnittebene in Figur 9 entlang der Längsachse des Bedienteilausschnitts weiter zu dem Endabschnitt des Bedienteilausschnitts hin verschoben ist.

Unter Bezugnahme auf die Figuren 1 bis 9 wird nachfolgend eine Vorgehensweise zum Befestigen des Bedienteils 120 an dem Gehäuseteil 110 mittels der Befestigungsvorrichtung 400 zusammenfassend erläutert.

Das Bedienteil 120 wird zwischen zwei endständig in dem Bedienteilausschnitt 550 bzw. Blechausschnitt eingeschobene Klemmprofilelemente 230 bzw. Tasterblenden 230 angeordnet bzw. positioniert. Nachfolgend wird das Bedienteil 120 durch die Klemmbügel 440 bzw. Klammern aus einem Kunststoffmaterial umfasst. Das Bedienteil 120 wird dann mit den Klemmbügeln 440 in Richtung Gehäuseteil 110 bzw. Blech gedrückt. Wenn das Bedienteil 120 in dem Bedienteilausschnitt 550 positioniert ist, werden die Klemmbügel 440 in Richtung der Endabschnitte 552 des Bedienteilausschnitts 550 seitlich auf die Klemmprofilelemente 230 geschoben. Das Bedienteil 120 ist somit fest im Bedienteilausschnitt 550 positioniert. Die Demontage erfolgt in umgekehrter Reihenfolge.

Anders ausgedrückt erfolgt zunächst ein Einsetzen der Klemmprofilelemente 230 in den Mittelabschnitt 554 bzw. den breiten Bereich des Bedienteilausschnitts 550. Nachfolgend erfolgt ein Verschieben der Klemmprofilelemente 230, bis die Klemmprofilelemente 230 mit den Endabschnitten 552 bzw. den schmalen Bereichen des Bedienteilausschnitts 550 in Eingriff sind. Nachfolgend wird das Bedienteil 120 in den Bedienteilausschnitt 550 eingesetzt. Dann werden die Klemmbügel 440 über das Bedienteil 120 gestülpt. Schließlich werden die Klemmbügel 440 auf die Klemmprofilelemente 230 verschoben, wobei zumindest ein Hinterschnitt und optional eine Verrastung vorgesehen sein können.

## Patentansprüche

1. Befestigungsvorrichtung (400) zum Befestigen eines Bedienteils (120) für ein Haushaltgerät (100), wobei das Haushaltgerät (100) ein Gehäuseteil (110) mit einem Bedienteilausschnitt (550) zur Aufnahme des Bedienteils (120) aufweist, wobei die Befestigungsvorrichtung (400) folgende Merkmale aufweist:
zumindest ein Klemmprofilelement (230), das ausgeformt ist, um formschlüssig mit dem Bedienteilausschnitt (550) koppelbar zu sein und das Bedienteil (120) bezüglich einer Bewegung in einer Erstreckungsebene des Bedienteilausschnitts (550) zu fixieren; und
zumindest einen Klemmbügel (440), der ausgeformt ist, um formschlüssig mit dem zumindest einen Klemmprofilelement (230) koppelbar zu sein und das Bedienteil (120) bezüglich einer Bewegung quer zu der Erstreckungsebene des Bedienteilausschnitts (550) zu fixieren.

2. Befestigungsvorrichtung (400) gemäß Anspruch 1, bei der der zumindest eine Klemmbügel (440) und das zumindest eine Klemmprofilelement (230) ausgeformt sind, um durch eine Translation relativ zueinander entlang der Erstreckungsebene miteinander koppelbar und voneinander lösbar zu sein.

3. Befestigungsvorrichtung (400) gemäß einem der vorangegangenen Ansprüche, bei der das zumindest eine Klemmprofilelement (230) ausgeformt ist, um durch eine Translation entlang der Erstreckungsebene mit dem Bedienteilausschnitt (550) koppelbar und von dem Bedienteilausschnitt (550) lösbar zu sein.

4. Befestigungsvorrichtung (400) gemäß einem der vorangegangenen Ansprüche, bei der das zumindest eine Klemmprofilelement (230) und der zumindest eine Klemmbügel (440) ausgeformt sind, um ineinander einzurasten.

5. Befestigungsvorrichtung (400) gemäß einem der vorangegangenen Ansprüche, bei der das zumindest eine Klemmprofilelement (230) und/oder der zumindest eine Klemmbügel (440) zumindest in einem Teilabschnitt hinterschnitten ausgeformt ist oder sind.

6. Befestigungsvorrichtung (400) gemäß einem der vorangegangenen Ansprüche, bei der der zumindest eine Klemmbügel (440) ausgeformt ist, um das Bedienteil (120) zumindest partiell zu umgreifen.

7. Befestigungsvorrichtung (400) gemäß einem der vorangegangenen Ansprüche, mit zwei Klemmprofilelementen (230) und zwei Klemmbügeln (440), wobei ein erster Klemmbügel (440) einem ersten Klemmprofilelement (230) zugeordnet ist, wobei ein zweiter Klemmbügel (440) einem zweiten Klemmprofilelement (230) zugeordnet ist.

8. Gehäuseteil (110) für ein Haushaltgerät (100), wobei das Gehäuseteil (110) folgendes Merkmal aufweist:
einen Bedienteilausschnitt (550) zur Aufnahme eines Bedienteils (120) für das Haushaltgerät (100), wobei der Bedienteilausschnitt (550) länglich ausgeformt ist, wobei der Bedienteilausschnitt (550) in an seine Enden angrenzenden Endabschnitten (552) eine erste Breite aufweist und in einem Mittelabschnitt (554) zwischen den Endabschnitten (552) eine zweite Breite aufweist, die größer als die erste Breite ist.

9. Gehäuseteil (110) gemäß Anspruch 8, bei dem der Bedienteilausschnitt (550) stufenförmige Übergangsabschnitte zwischen den Endabschnitten (552) und dem Mittelabschnitt (554) aufweist.

10. Haushaltgerät (100), das folgende Merkmale aufweist:
eine Befestigungsvorrichtung (400) gemäß einem der vorangegangenen Ansprüche;
ein Gehäuseteil (110) gemäß einem der vorangegangenen Ansprüche; und
ein Bedienteil (120), wobei das Bedienteil (120) mittels der Befestigungsvorrichtung (400) in einem Bereich des Bedienteilausschnitts (550) an dem Gehäuseteil (110) befestigbar oder befestigt ist.
